# EUROPEAN PATENT APPLICATION

(11) **EP 4 009 254 A1**
(43) Date of publication of application: **08.06.2022**
(21) Application number: 20211982.2
(22) Date of filing: 04.12.2020
(51) Int. Cl.: G06Q 10/06

(54) **METHOD OF OPERATING A PRODUCTION SYSTEM**

(71) Applicant: United Grinding Group Management AG, 3005 Bern (CH)
(72) Inventor: PLÜSS, Christoph, 3400 Burgdorf (CH); DIERGARDT, Urs, 3006 Bern (CH); JOSI, Christian, 3612 Steffisburg (CH); KÖHNLEIN, Marcus, 8153 Rümlang (CH)
(74) Representative: Maiwald Patent- und Rechtsanwaltsgesellschaft mbH

(57) **Abstract**

The invention relates to a method of operating a production system (1) comprising a job optimization unit (2) and at least two machines (3), wherein each machine (3) is allocated to a process optimization unit (5). The job optimization unit (2) receives a job request (8) and broadcasts a manufacturing request (9) which is based on the job request (8) to some or all of the process optimization units (5). The process optimization units (5) analyze the manufacturing request (9) based on the current status (6) of the machine (3), processes allocated to the machine (3) and resources (7) needed to complete at least a part of the manufacturing request (9) and report (11) to the job optimization unit (2) which parts of the manufacturing request (9) they can produce along with production parameters. The job optimization unit (2) collects the reports (11) from the process optimization units (5), generates an optimized production plan, and broadcasts a manufacturing plan (12) which is based on the production plan to the process optimization units (5). Finally, the machines (3) produce products according to the manufacturing plan (12) received by the process optimization units (5) allocated to the machines (3).

## Description

### Field of the invention

The invention relates to a method of operating a production system comprising at least two machines and a production system comprising at least two machines.

### Background of the invention

When a production system comprising at least two machines receives a new job, a decision has to be made which one of the machines will process the job or whether the job will be processed by more than one machine.

As an example, German patent application DE 10 2017 213 583 A1 discloses a process for production planning by means of a plurality of production facilities. In that process, tasks of a work plan with production capabilities of the production facilities are subjected to a comparison. Further, depending on the result of the comparison in each case at least one or more production facilities are commissioned to compare their production capability with the task.

As another example, United States patent US 8,145,333 B2 discloses a method of controlling an industrial process. In said method an order is received and the order is processed so as to generate an order instance representative of the received order in accordance with an order ontology. Further, a production plan instance is generated in accordance with a production plan ontology, the production plan instance being developed at least in part by a first agent in response to receiving at least one portion of the order instance. Here, the production plan instance is representative of a plan for operating the industrial process in a manner so as to satisfy at least one portion of the received order. Finally, the industrial process is controlled based at least indirectly upon the production plan instance.

As yet another example, German patent application DE 10 2016 002 194 A1 discloses a method for carrying out a production task. In said method, a production plan is provided in a control device and at least one mobile manufacturing unit is contacted by the control device to implement the manufacturing plan. Finally, a plurality of mobile manufacturing units is assembled to form a manufacturing plant suitable for implementing the manufacturing plan.

However, the above mentioned methods provide little flexibility in scheduling the jobs.

### Summary of the invention

It is an object of the present invention to provide an alternative and more flexible method of operating a production system comprising at least two machines. It is a further object of the present invention to provide a production system comprising at least machines wherein jobs are distributed in an alternative and more flexible way.

In an aspect of the present invention, a method of operating a production system comprising at least two machines is provided. Said production system may be adapted to produce a wide variety of products and consequently the machines may be of a wide range of production machines. In particular, the machines are machine tool devices with numerical control (NC) or programmable logic controller (PLC) control systems.

The production system further comprises a job optimization unit and each machine is allocated to a process optimization unit. Said job optimization unit and process optimization units are adapted to exchange data, e.g., via a wired connection, a wireless connection or via the internet. A process optimization unit may have one or several machines allocated to it.

According to the method, the job optimization unit receives a job request. Said job request may, e.g., be entered manually, be received from an accounting unit or be received from a costumer, wherein the receiving may be, e.g., via a wired connection, a wireless connection or via the internet.

When the job optimization unit has received the job request, it broadcasts a manufacturing request to some or all of the process optimization units. Said manufacturing request is based on the job request. The process optimization units then analyze the manufacturing request based on the current status of the machine, processes allocated to the machine and resources needed to complete at least a part of the manufacturing request. The processes allocated to the machine may also include maintenance and/or service processes. Since the process optimization units are allocated to the machines, the information to analyze the manufacturing request is available to them.

In a next step of the method, the process optimization units report to the job optimization unit which parts of the manufacturing request they can produce along with production parameters. The job optimization unit collects the reports from the process optimization units and generates an optimized production plan. Said generation of the optimized production plan is based on the reports from the process optimization units.

The job optimization unit then broadcasts a manufacturing plan to the process optimization units, wherein said manufacturing plan is based on the production plan. The machines then produce products according to the manufacturing plan received by the process optimization units allocated to the machines.

By distributing the manufacturing requests to the process optimization units, scheduling of the jobs is performed in a decentralized way, making it very flexible. For example, it is easy to add new machines to the production system, since the relevant information about the new machines is known to the process optimization units allocated to said new machines. The job optimization unit just has to send the manufacturing request to the process optimization unit allocated to the new machine and will receive the report from said process optimization unit.

In an example, the production system comprises at least two job optimization units, wherein the job optimization units receive and process job requests independently from each other. As an example, the job optimization units receive job requests from different costumers. Also, if the production system is distributed over several production plants, each of the production plants may have a job optimization unit allocated to it. And since the processes allocated to a machine are known to the respective process optimization unit, there is no need for the different job optimization units to communicate with one another.

In an example, the machines are located within one production plant and/or are located remotely from one another. This includes the option that several machines may be located in one production plant and several machines in another production plant, wherein the one production plant the other production plant are located remotely from one another. In generating the optimized production plan, the job optimization unit has to take the different location of the machines into consideration, especially if a product has to be produced by several machines and the intermediate parts have to be shipped from one production plant to another production plant. Also, the final destination of the products has to be taken into account by the job optimization unit, since it saves shipping cost and is therefore beneficial to have the product completed close to the final destination of the product.

In an example, the job request includes a specification of the products to be produced, the amount of products to be produced, the expected quality of the product to be produced, cost constraints on the production of the products and/or time constraints on the production of the products. The specification of the products may, for example, be a CAD file detailing the products. The expected quality, cost constraints and/or time constraints may be single values or a range of values. It is also possible that the ranges of values for the quality, cost constraints and/or time constraints depend on one another, such that, e.g., a higher cost is admissible if the quality is higher or the product gets produced faster.

In an example, the manufacturing request is essentially identical to the job request. In this case, each of the process optimization units receives the full information contained in the job request and can determine which parts of the manufacturing request can be produced by the respective machine. In another example, the manufacturing request is a totally independent processing step of the job request. In this case, the job optimization unit has split the job request in at least two totally independent processing steps. To each of these two totally independent processing steps, a manufacturing request is generated and broadcast to the process optimization units.

In an example, the job optimization unit broadcasts the manufacturing request to a selection of process optimization units, wherein the selection is based on criteria of the job request and/or criteria of the process optimization units and their associated machines. As an example, the job optimization unit may broadcast the manufacturing request only to those process optimization units that are associated to machines that could in principle produce parts of the job request. As another example, the job optimization unit may broadcast the manufacturing request only to process optimization units that are associated to machines in a certain production plant.

In an example, upon receipt of the manufacturing request, the process optimization units communicate with neighboring process optimization units to assess which production steps can be split between two or more machines and how this splitting can be optimally performed. In this context, neighboring process optimization units may, e.g., be process optimization units associated to machines in the same production plant. The splitting of the production step may be such that one machine performs a first part of the production step and another machine a second part. Depending on the actual production step, such splitting may be made at different points of the production step and the optimal splitting point may be determined among the process optimization units of the respective machines.

In an example, the current status of the machine includes equipment installed in the machine, tools available to the machine, the precision of the tools available to the machine and/or software capabilities of the machine. As an example, the equipment installed in the machine is a specific grinding tool out of a plurality of different grinding tools that are available to the machine and may be installed instead of the currently installed grinding tool. As yet another example, the current status of a grinding machine may further comprise the size of the grinding space, the kinematics of the grinding machine or the general accuracy of the grinding machine.

In an example, the resources needed by the machine include primary products, additional tools, additional software and/or human operators. The additional tools are, e.g., tools that are not directly available to the machine but may be purchased or rented. Similarly, additional software is, e.g., software that is not directly available to the machine but may be purchased or leased. Also, human operators may be required to operate the machine during at least a part of the production or, e.g., to change tools on the machine.

In an example, the analysis of the manufacturing request by the process optimization unit is further based on planned configuration changes of the machine. Said planned configuration changes may include the installation of different tools on the machine. If a configuration change is planned, the production of the product according to the currently analyzed manufacturing request may, e.g., be performed before or after the configuration change, depending on the tools needed to process the request.

In an example, the analysis of the manufacturing request by the process optimization unit includes a matching of the requirements of the manufacturing request with the capabilities of the machine associated with the process optimization unit. Said matching may be performed, e.g., by analytical methods, Monte Carlo methods or artificial intelligence.

In an example, the production parameters include a time when the product will be produced, a time needed to produce the product, a cost needed to produce the product and/or an achievable quality of the product. Said production parameters are determined by the process optimization unit which based on the information about the respective machine available to the process optimization unit. In this decentralized approach, the job optimization unit does not need detailed information about the machines, since this part of the method of operating the production system is performed by the process optimization units.

In an example, the optimization of the production plan by the job optimization unit includes a multi-dimensional analysis, taking into account a process time, production cost, production quality, production risk and/or resources needed. Several different multi-dimensional analysis techniques are known to the person skilled in the art, including analytical methods, Monte Carlo methods or artificial intelligence.

In an example, the manufacturing plan for a machine is based on the production plan obtained by the job optimization unit and comprises at least those parts of the production plan which have to be produced by the particular machine.

In an example, the process optimization units report different options and/or compromises with different production parameters to the job optimization unit and the job optimization unit takes said different options into account when optimizing the production plan. Hence, in addition to the different options given by the different machines that may produce the product, there are additional options for one machine available to the job optimization unit. The different options may include different parts of the manufacturing request that may be performed by the machine, different quality, different delivery time and/or different cost.

These options given by the process optimization unit to the job optimization unit may be in addition or alternatively to the results of the communication of the process optimization units to their neighboring process optimization units.

In an example, if the job optimization unit cannot generate a production plan fulfilling the requirements of the job request exactly, one or more best compromises are presented by the job optimization unit to a human controller and/or the job request is adjusted by a human controller. In the former case, the human controller may directly choose among the best compromises or determine that none of the compromises are good enough. In the latter case, the human controller adjusts the job request, maybe based on consultation with the costumer. The adjusted job request is then processed by the job optimization unit.

In an example, the quality of a produced product is assessed, feedback on this quality along with the options selected by the process optimization units (5) are provided to the process optimization units and the process optimization units update their production parameters based on this feedback. Assessing the quality of the produced product may be performed automatically and/or by a human quality officer.

In another aspect of the present invention, a production system comprising a job optimization unit and at least two machines is provided. Each machine has a process optimization unit allocated to it and the production system is operated according to the method described above. Since manufacturing requests are distributed by the job optimization unit to the process optimization units, said production system functions in a decentralized and therefore flexible way.

It shall be understood that a preferred embodiment of the invention can also be any combination of the dependent claims with the respective independent claim.

These and other aspects of the invention will be apparent from and elucidated with reference to the embodiments described hereinafter.

### Brief description of the drawings

In the following, preferred embodiments of the invention will be described, by way of example only, and with reference to the drawings in which:

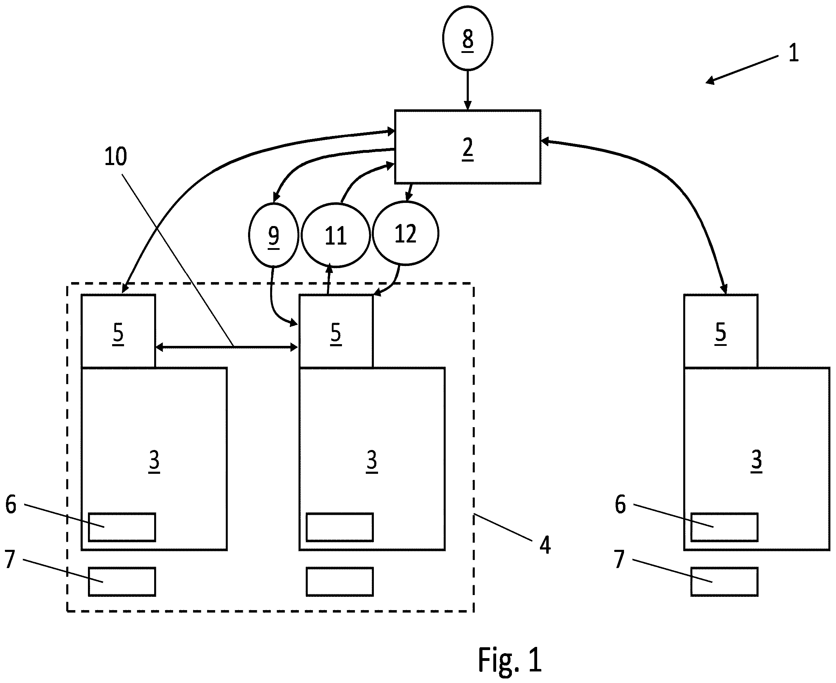

Fig. 1 shows a schematic overview of the production system and the method of operating the production system.

### Detailed description of embodiments

Figure 1 shows a schematic overview of a production system 1 and illustrates a method of operating the production system 1.

The production system 1 comprises a job optimization unit 2, which may be a computer or a computing center, depending on the size and complexity of the production system 1. In another embodiment, the job optimization unit 2 may also be a decentral system, e.g., a cloud system.

The production system 1 further comprises a plurality of machines 3, three of which are shown in Figure 1. The machines 3 may be of a wide range of productions machines, e.g., machine tool devices with numerical control (NC) or programmable logic controller (PLC) control systems. As an example, two of the machines 3 belong to one production plant 4 and the other machine 3 is remotely located.

The production system 1 further comprises process optimization units 5, wherein each machine 3 is allocated to a process optimization unit 5. The job optimization unit 2 and the process optimization units 5 are adapted to exchange data, e.g., via a wired or wireless connection or via the internet. Also, neighboring process optimization units 5, e.g., the process optimization units 5 belonging to the same production plant 4, are adapted to exchange data.

The process optimization units 5 are connected to the respective machines 3 and have information about the respective machines 3, such as the current status 6 of the machine 3 or the resources 7 available to the machine 3. The current status 6 of the machine 3 includes, e.g., equipment installed in the machine 3, tools available to the machine 3, the precision of the tools available to the machine 3 and software capabilities of the machine 3. Among the resources 7 available to the machine 3, which may be needed to process a job, are primary resources, additional tools that may be installed at a cost, additional software that may be used at a cost and human operators that may have to supervise or conduct a certain production step or have to change tools on the machine 3.

During operation of the production system 1, the job optimization unit 2 receives a job request 8. Said job request 8 may have been entered manually, may have been received from an accounting unit or may have been received from a costumer and includes a specification of the products to be produced, the amount of products to be produced, the expected quality, cost and time constraints.

The job optimization unit 2 processes the job request 8 and generates manufacturing requests 9 based on the job request 8. Said manufacturing requests 9 may be essentially identical to the job request 8 or may be totally independent processing steps of the job request 8. In the latter case, several manufacturing requests 9 will be generated from one job request 8 such that when the manufacturing requests 9 are combined, the result of the job request 8 will be achieved.

The job optimization unit 2 then broadcasts the manufacturing requests 9 to the process optimization units 5. For reasons of clarity, Figure 1 shows only one communication between the job optimization unit 2 and a process optimization unit 5 in detail; the communication to the other two process optimization units 5 is identical.

Upon receipt of the manufacturing requests 9, the process optimization units 5 analyze the manufacturing requests 9, i.e., they compare the manufacturing requests 9 to the capabilities of the respective machine 3, in particular based on the current status 6 of the machine 3, on processes that have already been allocated to the machine 3 and on the resources 7 that may be needed to complete at least a part of the manufacturing request 9. Said analysis of the manufacturing requests 9 may be performed by each process optimization unit 5 separately, distributed over a network of process optimization units 5 or in a decentral system, e.g., a cloud system.

Additionally, the process optimization units 5 of neighboring machines 3, i.e., the process optimization units 5 of machines 3 that are within the same production plant 4, communicate 10 with one another to assess which production steps can be split between those machines 3. For instance, one machine 3 may perform coarse grinding and the other machine 3 fine grinding. Said two machines 3 communicate at which level of grinding a component will be transferred from one machine 3 to the other machine 3, and especially which said level of grinding will yield the optimal performance.

Once the process optimization units 5 have finished the analysis of the manufacturing request 9, they send a report 11 to the job optimization unit 2. The job optimization unit 2 collects said reports 11 from the process optimization units 5 and generates an optimized production plan based on said reports 11. Said optimization of the production plan includes a multi-dimensional analysis, depending, inter alia, on process time, production cost, production quality, production risk and/or the resources 7 needed.

Based on the optimized production plan, the job optimization unit 2 then generates manufacturing plans 12 for each of the machines 3 and sends the manufacturing plans 12 to the respective process optimization units 5. Said manufacturing plans 12 include those parts of the optimized production plan that are relevant to the respective machine 3, i.e., the tasks that have to be completed by the respective machine 3.

The machines 3 then produce the products according to the manufacturing plan 12.

In conclusion, the operation of the production system 1 is decentralized and therefore flexible.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. Any reference signs in the claims should not be construed as limiting the scope.

### List of reference signs

- 1: production system
- 2: job optimization unit
- 3: machine
- 4: production plant
- 5: process optimization unit
- 6: current status
- 7: resources
- 8: job request
- 9: manufacturing request
- 10: communication
- 11: report
- 12: manufacturing plan

## Claims

1. Method of operating a production system (1) comprising a job optimization unit (2) and at least two machines (3), wherein each machine (3) is allocated to a process optimization unit (5), wherein
the job optimization unit (2) receives a job request (8),
the job optimization unit (2) broadcasts a manufacturing request (9) which is based on the job request (8) to some or all of the process optimization units (5),
the process optimization units (5) analyze the manufacturing request (9) based on the current status (6) of the machine (3), processes allocated to the machine (3) and resources (7) needed to complete at least a part of the manufacturing request (9),
the process optimization units (5) report (11) to the job optimization unit (2) which parts of the manufacturing request (9) they can produce along with production parameters,
the job optimization unit (2) collects the reports (11) from the process optimization units (5) and generates an optimized production plan,
the job optimization unit (2) broadcasts a manufacturing plan (12) which is based on the production plan to the process optimization units (5) and
the machines (3) produce products according to the manufacturing plan (12) received by the process optimization units (5) allocated to the machines (3).

2. Method according to claim 1, wherein the production system (1) comprises at least two job optimization units (2), wherein the job optimization units (2) receive and process job requests (8) independently from each other.

3. Method according to claim 1 or 2, wherein the machines (3) are located within one production plant (4) and/or are located remotely from one another.

4. Method according to any of claims 1-3, wherein the job request (8) includes a specification of the products to be produced, the amount of products to be produced, the expected quality of the product to be produced, cost constraints on the production of the products and/or time constraints on the production of the products.

5. Method according to any of claims 1-4, wherein the manufacturing request (9) is essentially identical to the job request (8) or the manufacturing request (9) is a totally independent processing step of the job request (8).

6. Method according to any of claims 1-5, wherein the job optimization unit (2) broadcasts the manufacturing request (9) to a selection of process optimization units (5), wherein the selection is based on criteria of the job request (8) and/or criteria of the process optimization units (5) and their associated machines (3).

7. Method according to any of claims 1-6, wherein, upon receipt of the manufacturing request (9), the process optimization units (5) communicate (10) with neighboring process optimization units (5) to assess which production steps can be split between two or more machines (3) and how this splitting can be optimally performed.

8. Method according to any of claims 1-7, wherein the current status (6) of the machine (3) includes equipment installed in the machine (3), tools available to the machine (3), the precision of the tools available to the machine (3) and/or software capabilities of the machine (3) and wherein the resources (7) needed by the machine (3) include primary products, additional tools, additional software and/or human operators.

9. Method according to any of claims 1-8, wherein the analysis of the manufacturing request (9) by the process optimization unit (5) is further based on planned configuration changes of the machine (3) and/or wherein the analysis of the manufacturing request (9) by the process optimization unit (5) includes a matching of the requirements of the manufacturing request (9) with the capabilities of the machine (3) associated with the process optimization unit (5).

10. Method according to any of claims 1-9, wherein the production parameters include a time when the product will be produced, a time needed to produce the product, a cost needed to produce the product and/or an achievable quality of the product.

11. Method according to any of claims 1 - 10, wherein the optimization of the production plan by the job optimization unit (2) includes a multi-dimensional analysis, taking into account a process time, production cost, production quality, production risk and/or resources (7) needed and/or wherein the manufacturing plan (12) comprises at least those parts of the production plan which have to be produced by the particular machine (3).

12. Method according to any of claims 1 - 11, wherein the process optimization units (5) report (11) different options and/or compromises with different production parameters to the job optimization unit (2) and the job optimization unit (2) takes said different options into account when optimizing the production plan.

13. Method according to any of claims 1 - 12, wherein, if the job optimization unit (2) cannot generate a production plan fulfilling the requirements of the job request (8) exactly, one or more best compromises are presented by the job optimization unit (2) to a human controller and/or the job request (8) is adjusted by a human controller.

14. Method according to any of claims 1 - 13, wherein the quality of a produced product is assessed, feedback on this quality along with the options selected by the process optimization units (5) are provided to the process optimization units (5) and the process optimization units (5) update their production parameters based on this feedback.

15. Production system comprising a job optimization unit (2) and at least two machines (3), wherein each machine (3) has a process optimization unit (5) allocated to it, wherein the production system (1) is operated according to any of claims 1 - 14.
